# EUROPEAN PATENT APPLICATION

(11) **EP 1 862 440 A1**
(43) Date of publication of application: **05.12.2007**
(21) Application number: 06425373.5
(22) Date of filing: 31.05.2006
(51) Int. Cl.: C04B 41/48, C04B 41/52

(54) **A process for decorating slate objects**

(71) Applicant: Ravazzini, Alberto, 41028 Serramazzoni (Modena) (IT); Serantes Miguel, Fernando, 40006 Segovia (ES); Cobo Arias, Victor, 32300 Barco de Valdeorras (ES)
(72) Inventor: Ravazzini, Alberto, 41028 Serramazzoni (Modena) (IT)
(74) Representative: Gotra, Stefano

(57) **Abstract**

The process comprises a stage of applying a coat of epoxy glaze on the surface of a slate object followed by a stage of storage of the object up until the epoxy glaze coating catalyses.

## Description

The invention preferably relates to a process for the decoration of slate slabs.

As is known, slate, also known as Pizarra slate, is normally used in slim slabs, of a thickness comprised between 2 to 4 millimetres, and is used for external coverings. Slate in the natural state is characterized by a very dark colour with slighty lighter veins.

In the prior art decorating a slate object is particularly difficult. All prior art realizations for decorating materials for building coverings, such as ceramic tiles, roofing tiles, bent tiles, include the use of vitreous glazes. These glazes indeed guarantee high standards of hardness and a long working life but, as known, they also require a firing stage in order to undergo the vitrification process, which enables them to adhere to the slate and gives them their known mechanical properties.

The vitrification of normally used glazes occurs at temperatures over 600°C; the slates therefore require heating in kilns which considerably increases production cycle times and costs, as the heating of the slate slabs hast to be rather slow in order to avoid any possible damage to the materials.

The main aim of the present invention is to provide a quick and inexpensive process for decorating slate objects.

An advantage of the process is that no heating of the slate objects is required.

Further characteristics and advantages of the process will better emerge from the detailed description that follows.

The process comprises a stage of applying a coat of epoxy glaze on the surface of a slate object, followed by a storage stage thereof up until the epoxy glaze coating catalyses.

Epoxy glazes are widely-used, usually for decorating smooth surfaces, as it is well known that for proper adhesion, a coat of epoxy glaze requires a quite even, regular and flat surface.

The present invention shows how epoxy glaze can be applied on slate with excellent results. With an epoxy glaze decoration of a slate object is perfectly practicable as this kind of cold catalysing glaze does not require an excessive heating of the slate. Otherwise some polyurethane resins can be used instead of the epoxy glazes.

The process preferably comprises a stage of heating the object, before the stage of applying a coat of epoxy glaze, in order to dilate the-pores of the slate, which aids adhesion of epoxy glaze to the slate. The heating stage brings the surface temperature of the slate object to approximately 30°C. The adhesion of the coating of epoxy glaze is notably improved by this heating of at least the surface and is comparable to the adhesion of a glaze coating on a ceramic material.

In order to reduce the surface unevenness of the object, which might be made even more noticeable after applying the epoxy glaze coat, the process includes, following the storage stage, a stage of mechanical brushing to remove a part of the epoxy glaze coating from the natural reliefs on the object surface. The brushing stage can be carried out using wire brushes or abrasive surfaces.

The brushing stage also brings out the natural reliefs of the slate, notwithstanding the epoxy glaze coating. The natural appearance of slate, with veins in relief, is considerably valued.

After catalysis, the epoxy glaze coating is very hard, even harder than slate itself. However, in order to enhance the mechanical characteristics of resistance and hardness of the object surface, particularly in those areas where the brushing stage has markedly removed the epoxy glaze coating, following the mechanical brushing the process includes a stage of applying a transparent protective coating.

The transparent protective coating preferably contains an epoxy and micronized corundum compound, which affords the double advantage of cold catalysis and very considerable hardness.

## Claims

1. A process for decorating slate objects, comprising the following stages: applying a coat of epoxy glaze on the surface of a slate object; storage of the object up until the epoxy glaze coat catalyses.

2. The process of claim 1, comprising a stage, before the applying a coat of epoxy glaze, of heating the object to dilate the pores of the slate in order to aid adhesion of the epoxy glaze coat.

3. The process of claim 2, **characterised in that** the heating stage of the object brings the surface temperature of the object to approximately 30°C.

4. The process of any one of the preceding claims, comprising a stage, following the storage of the object, of mechanical brushing of the object to remove the epoxy glaze coat from the natural reliefs on the object surface.

5. The process of claim 4, wherein the brushing stage is performed using wire brushes or abrasive surfaces.

6. The process of claim 4, comprising a stage of applying a transparent protective coating on the object surface following the stage of mechanical brushing of the object.

7. The process of claim 6, wherein the transparent protective coating comprises an epoxy and micronized corundum compound.

8. The process of any one of the preceding claims, wherein the stage of applying a coat of epoxy glaze on the surface of a slate object is replaced by a stage of applying a coat of polyurethane resin on the surface of the slate object.
